# EUROPEAN PATENT SPECIFICATION

(11) **EP 1 481 135 B1**
(45) Date of publication and mention of the grant of the patent: **29.11.2006**
(21) Application number: 03743298.6
(22) Date of filing: 28.02.2003
(51) Int. Cl.: E02D 29/16, E02D 5/14, E02B 17/00

(54) **SEAL FOR USE BETWEEN TWO FACING CYLINDRICAL SURFACES AND A METHOD FOR MOUNTING A SLEEVE ON A PILE ELEMENT**
DICHTUNG ZUR VERWENDUNG ZWISCHEN ZWEI ZUEINANDER WEISENDEN ZYLINDRISCHEN FLÄCHEN UND VERFAHREN ZUR BEFESTIGUNG EINER MUFFE AUF EINEM ROHRELEMENT
JOINT DESTINE A ETRE UTILISE ENTRE DEUX SURFACES CYLINDRIQUES OPPOSEES ET PROCEDE DE MONTAGE D'UN MANCHON SUR UN ELEMENT PIEU

(30) Priority: 01.03.2002 DK 200200325
(43) Date of publication of application: 01.12.2004
(73) Proprietor: MT Hoejgaard A/S, 2860 Soeborg (DK)
(72) Inventor: MADSEN, Bent, Stensgaard, DK-3520 Farum (DK)
(74) Representative: Thierry-Carstensen, Ole Jean
(86) International application number: PCT/DK2003/000128
(87) International publication number: WO 2003/074797

(56) References cited:
- EP-A- 0 750 162
- FR-A- 1 260 943
- FR-A- 2 496 830
- US-A- 3 570 259

## Description

### Technical Field

The invention relates to an assembly comprising an inner pile unit, a connecting member and a gasket mounted between opposing cylindrical surfaces of rotation on the inner pile unit and the connecting member, respectively, where said connecting member is mounted on the outer side of said pile unit.

### Background Art

Gaskets are known which are to be mounted between opposing cylindrical surfaces of rotation coaxially arranged relative to one another. Such gaskets are for instance known from French Patent No. 1,260,943. The gasket described in this publication includes a sleeve-shaped sealing member. This sealing member is funnel-shaped with a relatively large external diameter at one end corresponding to the inner diameter of an outer pipe. At the opposite end, the sealing member presents an inner diameter which is smaller than the external diameter of an inner pipe. When the two pipes are joined, the sleeve-shaped sealing member tightly abuts the outer periphery of the inner pipe. The sealing member is secured to the inner side of the outer pipe for instance by means of a ring member.

A similar sealing member is known from French Patent Application No. 2,496,830. This publication deals with the use of the sealing member in connection with the mounting of a drilling rig, where the sealing member is placed with the narrow side facing downwards on a level below the sea level in order to prevent water from penetrating into the cavity between a pile unit and a connecting member used for the mounting of a drilling rig. The sealing member prevents water from penetrating into the intermediate cavity in such a manner that a cement mix filled into the cavity from the top can pass into a fluid-free chamber.

### Brief Description of the Invention

The present invention is in particular intended to be used in connection with the mounting of offshore wind turbines. These offshore wind turbines are suitably mounted on a single pile unit by means of a suitable connecting member, said single pile unit being rammed down into the sea bed. Both the pile unit and the connecting member are of a substantially tubular shape, and at the top the connecting member is provided with a flange or the like platform for the mounting of an offshore wind turbine. The connecting member must be arranged such that its axis is placed in an accurate, vertical position, whereas the axis of the pile unit often deviates from the vertical position. As a result, the pile unit and the connecting member can be arranged both eccentrically and inclining relative to one another. Typically, the pile unit presents a diameter of 4 to 5 m, and the slot between the connecting member and the pile unit averages approximately 70 mm wide. In practice the slot can for instance vary from 20 mm to 130 mm along the circumference. The cavity between the pile unit and the connecting member is filled with a suitable cement mix which is retained in said cavity by means of an intermediate gasket, such as inflatable gaskets which are relatively complicated and cost-intensive to produce and use. The use of the above known funnel-shaped gaskets does not ensure a complete tightness in slots of a varying width.

Accordingly, the object of the invention is to provide a gasket operating in an advantageous manner even in connection with large variations in the slot width, and which at the same time is simple and financially advantageous to produce and use.

This object is obtained by means of an assembly which according to the invention is characterised in that the gasket includes a sleeve-shaped, resilient, rotationally cylindrical sealing member having in the non-mounted state an inner diameter which is smaller than the external diameter of the pile unit, and fastening means with which one end of said sealing member is mounted on the inner side of the connecting member, after said end of the sealing member has been subjected to a radial stretching, whilst the other end of the sealing member seals tightly against the outer surface of the pile unit.

In this manner an assembly is obtained, the gasket of which after the mounting on the inner side of the connecting member can adjust to the outer side of the pile unit independent of whether the intermediate slot is of a width varying rather substantially all around the pile unit and independent of whether the inclination of said pile unit relative to vertical differs from the inclination relative to vertical of said connecting member.

According to the invention, the sealing member may be an oblong strip-shaped member, the opposite ends of which are interconnected. As a result, the strip-shaped member can be produced in a relatively easy manner by being cut out of a plate-shaped material followed by a bending and joining of the ends thereof, said procedure being particularly easy in connection with a strip-shaped member with a relatively large inner diameter.

The sealing member according to the invention may optionally be made of several strip-shaped members.

The strip or strips may according to the invention advantageously be joined by means of dovetailed connecting members with the result that the joint is particularly strong.

The sealing member may particularly advantageously be made of a rubber material, and then the strip or strips may according to the invention be glued together by means of a glue, such as an acrylic glue or a two-pack glue.

In addition, the fastening means may according to the invention be a plurality of fish joints of a curved shape matching the inner side of the connecting member, said fish joints being adapted to be fastened to the connecting member preferably by means of screws. The resulting gasket is relatively easy to mount because the fish joints are mounted in a suitable sequence in such a manner that the end in question of the sealing member is subjected to the necessary stretching in a uniform manner all the way round and along the inner side of the connecting member.

According to a particular embodiment of the invention, one end of the sealing member may be shaped with a smaller thickness than the remaining portion of the sealing member, said end being placed opposite the end adapted to be mounted on the connecting member. The resulting sealing member can relatively easy follow possible minor unevennesses at the end abutting the pile unit, such as at a welding seam, so as thereby to ensure a good tightness.

It is particularly advantageously when the end of the sealing member presenting a small thickness is formed by a separate, lip-forming, circumferential strip fastened to the remaining portion of said sealing member.

The invention relates also to a method of mounting a connecting member for the erection of wind turbines or the like structures, said method involving the steps of initially raising a base-forming pile unit followed by a mounting thereon of the connecting member by way of casting in a space which is defined by opposing cylindrical surfaces of rotation and downwardly by a gasket arranged between said cylindrical surfaces of rotation. According to the invention this method is characterised in that the gasket is produced from a sleeve-shaped, resilient, rotationally cylindrical sealing member, which in the non-mounted state presents an inner diameter being smaller than the external diameter of the pile unit, that during the mounting of a gasket of the above-defined type with one of its ends on the inner side of the connecting member by means of fastening means, the sleeve-shaped sealing member is subsequently subjected to a radial stretching or expansion at said end end, and that the connecting member is subsequently moved downwards over the pile unit, while the sealing member is moved with the expanded end in front and the rear end of the sealing member expands and is pulled downwards along the outer side of said pile unit,said rear end sealing tightly against the outer side of the pile unit.

### Brief Description of the Drawings

The invention is explained in greater detail below with reference to the accompanying drawing, in which
Fig. 1 is a perspective view of a sealing member according to the invention,
Fig. 2 is a sectional view taken along the line I-I of the sealing member of Fig. 1,
Fig. 3 is a similar cross-sectional view of a second embodiment of the sealing member,
Fig. 4 is an axial, cross-sectional view of the sealing member in the mounted state between a tubular pile unit and a connecting member,
Fig. 5 is a radial, cross-sectional view on a larger scale of the sealing member mounted on the inner side of a connecting member by means of a fastening means, whereby parts have been removed for the sake of clarity,
Fig. 6 corresponds to Fig. 5, but here the connecting member has been moved downwards over the pile unit,
Fig. 7 is a top view of a fastening means in form of a fish joint, and
Fig. 8 is a front view of the fastening means of Fig. 7.

### Best Mode for Carrying Out the Invention

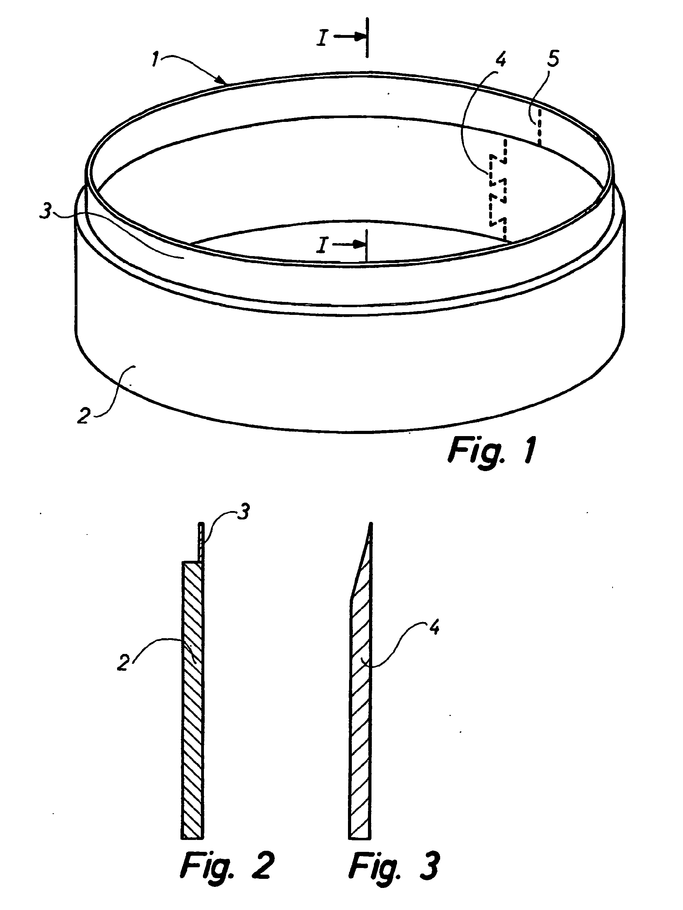

The sealing member shown in Fig. 1 is designated by the general reference numeral 1 and is formed as a rotationally cylindrical sleeve including two annular members 2 and 3 of a differing thickness and a differing width. The two members 2 and 3 are made of rubber and interconnected by means of a vulcanization or a glue. They are produced, preferably separately, from an oblong strip-shaped material and joined at the ends, cf. the dotted lines 4 and 5, respectively, where 4 indicates that the joining can be carried out by means of a dovetailed connection.

Fig. 3 shows that it is possible to use one member 4 instead of two joined members 2, 3, said single member 4 being pointed along one end in such a manner that the sleeve is thinner at the end in question.

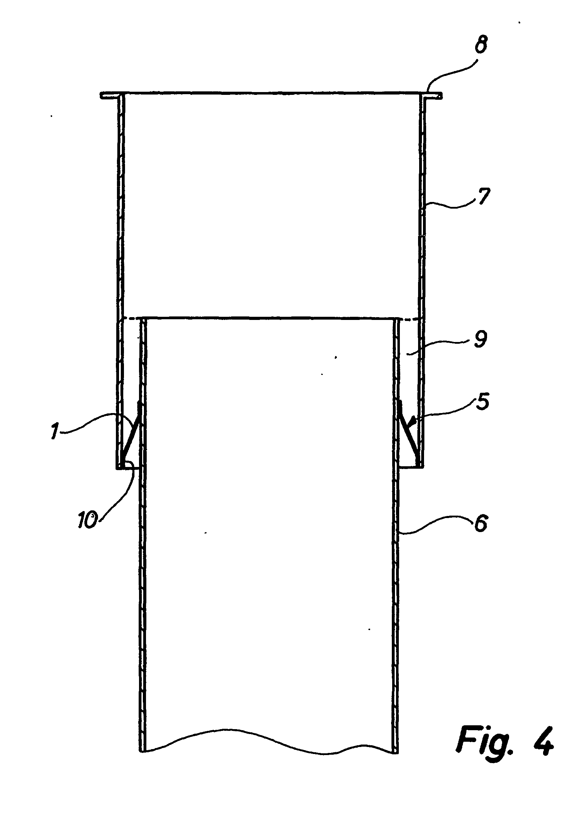

Fig. 4 shows the use of the sealing member as a gasket designated by the general reference numeral 5. The gasket 5 is arranged between a tubular pile unit 6 and a connecting member 7 secured on said pile unit. Usually, the pile unit 6 is rammed into the sea bed and the connecting member is mounted thereon in order to form a horizontal platform at 8 for the mounting of an offshore wind turbine not shown. The slot 9 between the pile unit 6 and the connecting member 7 is filled with a cement mix during the mounting procedure, said cement mix being retained in said slot by means of the gasket 5 so as subsequently to set. Both the outer side of the pile unit 6 and the inner side of the connecting member 7 are cylindrical surfaces of rotation. The upper end of the pile unit 6 can be positioned completely or partially below the water.

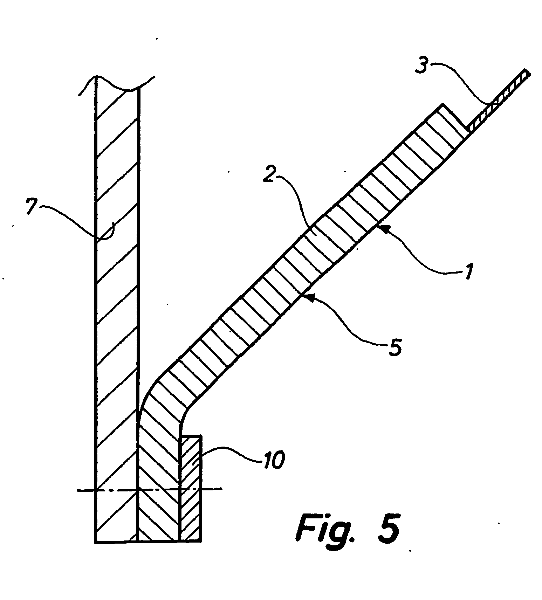

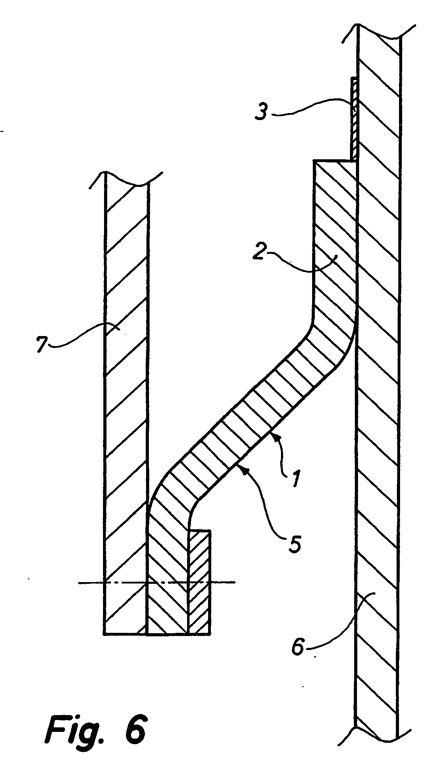

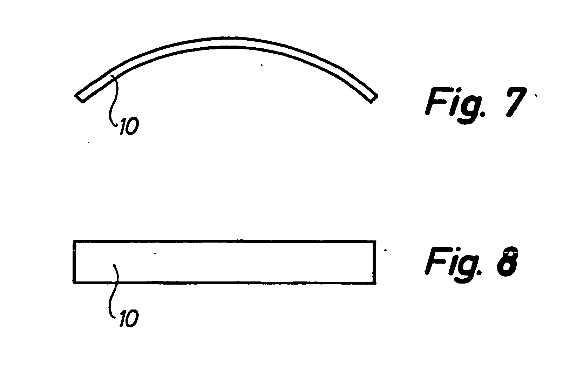

The sealing member 1 presents an inner diameter being smaller than the external diameter of the pile unit 6. Before the pile unit 6 and the connecting member 7 are joined, the sealing member 1 is initially mounted on the inner side of the connecting member 7 in the manner shown in Fig. 5. The mounting is carried out by means of suitable fastening means 10 which individually can be shaped as a curved fish joint, cf. Figs. 7 and 8, said fish j oint presenting a curvature matching the curvature of the connecting member. The fastening means 10 are arranged according to a suitable sequence on the inner side of one end of the sealing member 1 and fastened to the connecting member, such as by means of screws or bolts not shown being inserted through suitable holes not shown in the fastening means 10 and the sealing member 1. Initially, the fastening means 10 is arranged and mounted at one side of the sealing member 1, whereafter said fastening means 10 is suitably arranged at the diametrically opposite side so as finally to be arranged and mounted at suitable locations along the inner circumference of the connecting member 7. In this manner the end in question of the sealing member 1 is subjected to a strong stretching with the result that it assumes a shape corresponding to the shape shown in Fig. 5. Subsequently, the connecting member with the gasket 5 is moved downwards over the pile unit 6, said gasket including the sealing member 1 and the fastening means 10. As a result, the end of the sealing member 1 placed opposite the fastening means 10 tightly abuts the outer side of the pile unit 6, cf. Fig. 5 and in greater detail Fig. 6. In this manner the end in question of the sealing member 1 establishes a tight connection with the pile unit 6, the thin portion 3 tightly abutting possible unevennesses in form of for instance a welding seam. This sealing connection is further reinforced by means of cement being filled therein to a level above the gasket 5. The resilience of the rubber material implies that this sealing connection is established although the pile unit 6 and the connecting member 7 are positioned in an eccentric and inclining position relative to one another.

The sealing member 1 is suitably made of natural rubber, viz. 60° shore, and when the sealing member includes a separate portion 3, said portion 3 can be made of Neoprene, viz. 40° shore. When the pile unit 6 presents an external diameter of 4000 mm, and the connecting member presents an inner diameter of 4180 mm, the sealing member 1 presents an inner diameter of 3600 mm and a width of 500 mm, the member 2 being of a thickness of 25 mm and the member 3 being of a thickness of 5 mm.

The invention has been described with reference to preferred embodiments. Many modifications can be carried out without thereby deviating from the scope of the invention as defined in the claims.

## Claims

1. An assembly comprising an inner pile unit, a connecting member and a gasket mounted between opposing cylindrical surfaces of rotation on the inner pile unit (6) and the connecting member (7), respectively, where said connecting member is mounted on the outer side of said pile unit, **characterised in that** the gasket includes a sleeve-shaped, resilient, rotationally cylindrical sealing member (1) having in the non-mounted state an inner diameter which is smaller than the external diameter of the pile unit, and fastening means with which one end of said sealing member (1) is mounted on the inner side of the connecting member, after said end of the sealing member has been subjected to a radial stretching, whilst the other end of the sealing member seals tightly against the outer surface of the pile unit.

2. An assembly according to claim 1, **characterised in that** the sealing member (1) is an oblong strip-shaped member, the opposite ends of which are interconnected.

3. An assembly according to claim 1 or 2, **characterised in that** the sealing member is formed by several strip-shaped members.

4. An assembly according to claim 2 or 3, **characterised in that** the strip or strips are joined by means of dovetailed connections (4).

5. An assembly according to one or more of the claims 1 to 4, **characterised in that** the sealing member (1) is made of a rubber material.

6. An assembly according to claim 5, **characterised in that** the strip or strips are glued together by means of glue, such as an acrylic glue or a two-pack glue.

7. An assembly according to claim 6, **characterised in that** the fastening means (10) are formed bya plurality of fish joints of a curved shape matching the inner side of the connecting member (7), said fish joints being adapted to be fastened to the connecting member (7), preferably by means of screws.

8. An assembly according to one or more of the claims 1 to 7, **characterised in that** one end of the sealing member (1) is shaped with a smaller thickness than the remaining portion of the sealing member, said end being placed opposite the end adapted to be mounted on the connecting member (7).

9. An assembly according to claim 8, **characterised in that** the end of the sealing member (1) presenting a small thickness is formed by a separate, lip-forming, circumferential strip fastened to the remaining portion of said sealing member.

10. A method of mounting a connecting member (7) for the establishing of wind turbines or the like structures, said method involving the steps of initially raising a base-forming pile unit (6) followed by a mounting thereon of the connecting member (7) by way of casting in a space (9) which is defined by opposing cylindrical surfaces of rotation and downwardly by a gasket (5) arranged between said cylindrical surfaces of rotation, **characterised in that** the gasket (5) is produced from a sleeve-shaped, resilient, rotationally cylindrical sealing member (1), which in the non-mounted state presents an inner diameter being smaller than the external diameter of the pile unit (6), that during the mounting of a gasket (5) of the above-defined type with one of its ends on the inner side of the connecting member (7) by means of fastening means (10), the sleeve-shaped sealing member (1) is subsequently subjected to a radial stretching or expansion at said end, and that the connecting member(7) is subsequently moved downwards over the pile unit (6), while the sealing member (1) is moved with the expanded end in front and the rear end of the sealing member (1) expands and is pulled downwards along the outer side of said pile unit (6),said rear end sealing tightly against the outer side of the pile unit.

## Patentansprüche

1. Baugruppe mit einem inneren Rohrelement, einem Verbindungsstück und einer Dichtung, die zwischen einander gegenüberliegenden, zylindrischen Rotationsflächen am inneren Rohrelement (6), bzw. am Verbindungsstück (7), montiert ist, wobei das Verbindungsstück an der Außenseite des Rohrelements montiert ist,
**dadurch gekennzeichnet, dass**
die Dichtung ein muffenförmiges, elastisches, rotationszylindrisches Dichtungsbauteil (1) aufweist, das im unmontierten Zustand einen Innendurchmesser hat, der kleiner als der Außendurchmesser des Rohrelements ist, und Befestigungsmittel, mit denen ein Ende des Dichtungsbauteils (1) an der Innenseite des Verbindungsstücks montiert wird, nachdem das besagte Ende des Dichtungsbauteils radial aufgeweitet wurde, während das andere Ende des Dichtungsbauteils an der Außenseite des Rohrelements straff anliegend abdichtet.

2. Baugruppe nach Anspruch 1,
**dadurch gekennzeichnet, dass**
das Dichtungsbauteil (1) ein längliches, streifenförmiges Bauteil ist, dessen gegenüberliegende Enden miteinander verbunden sind.

3. Baugruppe nach Anspruch 1 oder 2,
**dadurch gekennzeichnet, dass**
das Dichtungsbauteil aus mehreren streifenförmigen Bauteilen gebildet ist.

4. Baugruppe nach Anspruch 2 oder 3,
**dadurch gekennzeichnet, dass**
der Streifen oder die Streifen mit Hilfe von Schwalbenschwanzverbindungen (4) verbunden sind.

5. Baugruppe nach einem oder mehreren der Ansprüche 1 bis 4,
**dadurch gekennzeichnet, dass**
das Dichtungsbauteil (1) aus einem Gummiwerkstoff besteht.

6. Baugruppe nach Anspruch 5,
**dadurch gekennzeichnet, dass**
der Streifen oder die Streifen mit Hilfe von Klebstoff miteinander verklebt werden, zum Beispiel mit einem Acrylklebstoff oder einem Zweikomponentenklebstoff.

7. Baugruppe nach Anspruch 6,
**dadurch gekennzeichnet, dass**
die Befestigungsmittel (10) aus einer Vielzahl von Laschenverbindungen einer gekrümmten Form gebildet werden, die an die Innenseite des Verbindungsstücks (7) angepasst sind, wobei die Laschenverbindungen so angepasst sind, dass sie am Verbindungsstück (7) befestigt werden können, vorzugsweise mit Hilfe von Schrauben.

8. Baugruppe nach einem oder mehreren der Ansprüche 1 bis 7,
**dadurch gekennzeichnet, dass**
ein Ende des Dichtungsbauteils (1) eine geringere Dicke aufweist, als der restliche Teil des Dichtungsbauteils, dieses Ende ist gegenüber dem Ende angeordnet, das für die Montage an dem Verbindungsstück (7) adaptiert ist.

9. Baugruppe nach Anspruch 8,
**dadurch gekennzeichnet, dass**
das Ende des Dichtungsbauteils (1), das eine geringe Dicke aufweist, von einem separaten, eine Lippe formenden, am Umfang verlaufenden Streifen gebildet wird, der an dem restlichen Teil des Dichtungsbauteils befestigt ist.

10. Verfahren zum Montieren eines Verbindungsstücks (7) für das Aufstellen von Windturbinen oder ähnlichen Konstruktionen, wobei das Verfahren folgende Schritte umfasst: zuerst, Aufstellen eines die Basis bildenden Rohrelements (6), gefolgt vom Montieren des Verbindungsstücks (7) daran, durch Vergießen eines Zwischenraums (9), der durch einander gegenüberliegende zylindrische Rotationsflächen, und nach unten hin, durch eine Dichtung (5) definiert ist, die zwischen den einander gegenüberliegenden, zylindrischen Rotationsflächen angeordnet ist,
**dadurch gekennzeichnet, dass**
die Dichtung (5) aus einem muffenförmigen, elastischen, rotationszylindrischen Dichtungsbauteil (1) gefertigt wird, das im unmontierten Zustand einen Innendurchmesser hat, der kleiner als der Außendurchmesser des Rohrelements (6) ist, dass während der Montage einer Dichtung (5) des oben definierten Typs mit einem ihrer Enden an der Innenseite des Verbindungsstücks (7) mit Hilfe von Befestigungsmitteln (10), das muffenförmige Dichtungsbauteil (1) anschließend an diesem Ende radial gestreckt oder aufgeweitet und das Verbindungsstück (7) anschließend über das Rohrelement (6) nach unten verschoben wird, während das Dichtungsbauteil (1), mit dem aufgeweiteten Ende voran, verschoben wird und das hintere Ende des Dichtungsbauteils (1) sich aufweitet und an der Außenseite des Rohrelements (6) entlang, nach unten gezogen wird, wobei das hintere Ende gegen die Außenwand des Rohrelements straff anliegend abdichtet.

## Revendications

1. Assemblage comprenant une unité de pieu interne, un membre de connexion et un joint statique monté entre des surfaces de rotation cylindriques opposées sur, respectivement, l'unité de pieu interne (6) et le membre de connexion (7), dans lequel le membre de connexion est monté sur le côté extérieur de ladite unité de pieu, **caractérisé en ce que** le joint statique comprend un membre d'étanchéité (1) cylindrique de révolution, élastique, en forme de manchon, qui a, à l'état non monté, un diamètre intérieur qui est plus petit que le diamètre extérieur de l'unité de pieu, et des moyens de fixation avec lesquels une extrémité dudit membre d'étanchéité (1) est montée sur le côté intérieur du membre de connexion, après que ladite extrémité du membre d'étanchéité a été soumise à un étirement radial, tandis que l'autre extrémité du membre d'étanchéité s'applique étroitement et de manière étanche contre la surface extérieure de l'unité de pieu.

2. Assemblage selon la revendication 1, **caractérisé en ce que** le membre d'étanchéité (1) est un membre oblong en forme de bande dont les extrémités opposées sont interconnectées.

3. Assemblage selon la revendication 1 ou 2, **caractérisé en ce que** le membre d'étanchéité est formé par plusieurs membres en forme de bande.

4. Assemblage selon la revendication 2 ou 3, **caractérisé en ce que** la bande ou les bandes sont jointes au moyen de connexions en queue d'aronde (4).

5. Assemblage selon une ou plusieurs des revendications 1 à 4, **caractérisé en ce que** le membre d'étanchéité (1) est réalisé en un matériau caoutchouteux.

6. Assemblage selon la revendication 5, **caractérisé en ce que** la bande ou les bandes sont collées ensemble au moyen de colle, telle qu'une colle acrylique ou une colle à deux composants

7. Assemblage selon la revendication 6, **caractérisé en ce que** les moyens de fixation (10) sont formés par une pluralité d'éclisses de forme courbe correspondant au côté intérieur du membre de connexion (7), lesdites éclisses étant adaptées pour être fixées au membre de connexion (7), de préférence au moyen de vis.

8. Assemblage selon une ou plusieurs des revendications 1 à 7, **caractérisé en ce qu'**une extrémité du membre d'étanchéité (1) est formée avec une plus petite épaisseur que la partie restante du membre d'étanchéité, ladite extrémité étant placée en face de l'extrémité adaptée pour être montée sur le membre de connexion (7).

9. Assemblage selon la revendication 8, **caractérisé en ce que** l'extrémité du membre d'étanchéité (1) présentant une petite épaisseur est formée par une bande circonférentielle séparée, formant une lèvre, fixée à la partie restante dudit membre d'étanchéité.

10. Procédé de montage d'un membre de connexion (7) pour l'établissement de turbines à vent ou des structures similaires, ledit procédé comprenant les étapes consistant à dresser au départ une unité de pieu (6) formant la base, puis à monter sur celle-ci le membre de connexion (7) par moulage dans un espace (9) qui est défini par des surfaces de rotation cylindriques opposées et vers le bas par un joint statique (5) agencé entre lesdites surfaces de rotation cylindriques, **caractérisé en ce que** le joint statique (5) est produit à partir d'un membre d'étanchéité cylindrique de révolution, élastique (1), qui présente, à l'état non monté, un diamètre intérieur qui est plus petit que le diamètre extérieur de l'unité de pieu (6), **en ce que** pendant le montage d'un joint statique (5) du type défini ci-dessus avec une de ses extrémités sur le côté intérieur du membre de connexion (7) à l'aide de moyens de fixation (10), le membre d'étanchéité (1) en forme de manchon est ensuite soumis à un étirement ou un élargissement radial à ladite extrémité, et **en ce que** le membre de connexion (7) est ensuite déplacé vers le bas sur l'unité de pieu (5), tandis que le membre d'étanchéité (1) est déplacé avec l'extrémité élargie à l'extrémité avant et l'extrémité arrière du membre d'étanchéité (1) s'élargit et est tirée vers le bas le long du côté extérieur de ladite unité de pieu (6), ladite extrémité arrière s'appliquant étroitement et de manière étanche contre le côté extérieur de l'unité de pieu.
